# EUROPÄISCHE PATENTSCHRIFT

(11) **EP 2 726 359 B1**
(45) Veröffentlichungstag und Bekanntmachung des Hinweises auf die Patenterteilung: **08.08.2018**
(21) Anmeldenummer: 12728405.7
(22) Anmeldetag: 20.06.2012
(51) Int. Cl.: B62D 21/11, B62D 21/16, B60G 11/30, F17C 13/08

(54) **HILFSRAHMEN MIT INTEGRIETEM PNEUMATISCHEM ODER HYDRAULISCHEM FLÜSSIGKEITSBEHÄLTER FÜR DAS FAHRZEUGCHASSIS VON KRAFTFAHRZEUGEN**
SUBFRAME WITH INTEGRATED PNEUMATIC OR HYDRAULIC LIQUID VESSEL FOR THE VEHICLE CHASSIS OF MOTOR VEHICLES
STRUCTURE AUXILIAIRE À RÉSERVOIR DE LIQUIDE PNEUMATIQUE OU HYDRAULIQUE INTÉGRÉ POUR CHÂSSIS DE VÉHICULES À MOTEUR

(30) Priorität: 01.07.2011 DE 102011106250
(43) Veröffentlichungstag der Anmeldung: 07.05.2014
(73) Patentinhaber: Audi AG, 85045 Ingolstadt (DE)
(72) Erfinder: MOHRLOCK, Dominik, 85053 ingolstadt (DE); JANEK, Thomas, 58644 Iserlohn (DE); GOERCKE, Andreas, 85053 Ingolstadt (DE); HUDLER, Roland, 85077 Manching (DE); WINTER, Friedrich-Oskar, 91790 Nennslingen (DE)
(86) Internationale Anmeldenummer: PCT/EP2012/002589
(87) Internationale Veröffentlichungsnummer: WO 2013/004347

(56) Entgegenhaltungen:
- DE-A1- 3 909 916
- DE-A1- 19 508 854
- DE-A1-102008 054 114
- DE-A1-102009 034 857
- US-A- 4 753 174
- US-A1- 2004 251 653

## Beschreibung

Die Erfindung betrifft ein Kraftfahrzeugchassis mit einem Hilfsrahmen nach dem Oberbegriff des Patentanspruchs 1.

Hilfsrahmen werden im Fahrzeugbau im Bereich des Fahrzeugchassis beispielsweise als Motorträger oder Achsträger verwendet. Ein in Hohlkammerbauweise hergestellter Hilfsrahmen kann zusätzlich die Funktion eines Druckspeichers zur Speicherung von Hydraulikflüssigkeit oder von Druckluft haben.

Aus der gattungsgleichen DE 10 2008 054 114 A1 ist ein in Hohlkammerbauweise gefertigter Hilfsrahmen bekannt, der ein Speichervolumen zum Speichern eines gasförmigen oder flüssigen Mediums hat. Der in dieser Druckschrift beschriebene Hilfsrahmen besteht aus Gussteilen mit Hohlräumen und es wird dort angemerkt, dass grundsätzlich auch Profilschweißkonstruktionen denkbar sind, deren Wandstärke im Hinblick auf den Betriebsdruck des gespeicherten Mediums entsprechend gewählt werden muss.

Aus der US 4,753,174 A ist ein Hilfsrahmen für ein Gestell eines Eisenbahnwagons bekannt. Dabei sind im mittleren Bereich eines Querträgers die ein Drehgelenk ausbildende Bauteile angeordnet und endseitig Luftkammern vorgesehen.

Die US 2004/0251653 A1 beschreibt ein Luftfedersystem mit einem Hohlträger, wobei die Luftversorgung über den Hohlträger erfolgt.

Die DE 195 08 854 A1 zeigt ein Druckluftbehältnis bei einer Luftfederung für ein Kraftfahrzeug. Hier erfolgt die Druckluftversorgung über einen Radkastendom des Kraftfahrzeugs.

Aus der DE 10 2009 034 857 A1 ist eine Dämpfungsvorrichtung zur Dämpfung von Schwingungen eines Fahrzeugs bekannt, die einen Luftkanal zur Verbindung eines Reifen-Luftvolumens in einem Reifen des Fahrzeugs mit dem Aufnahmeluftvolumen in einem Aufnahmeluftbehälter aufweist.

Der Erfindung liegt die Aufgabe zugrunde, ein Kraftfahrzeugchassis mit einem Hilfsrahmen zu schaffen, der einen Druckspeicher beinhaltet und möglichst einfach herstellbar ist.

Diese Aufgabe wird gelöst mit den Merkmalen des Patentanspruchs 1. Bevorzugte Weiterbildungen der Erfindung sind Gegenstand der Unteransprüche.

Erfindungsgemäß weist der Hilfsrahmen eine Quertraverse auf, die als durchgängiges rippenverstärktes Bauteil, insbesondere als durchgängiges rippenverstärktes Strangpressteil, ausgebildet ist und einen druckfesten Hohlraum für einen Druckspeicher bildet. Dieser druckfeste Hohlraum wird an beiden Stirnseiten der Quertraverse von angrenzenden Knotenelementen, die bevorzugt als Gussknoten ausgebildet sind, abgeschlossen. Das bevorzugt metallische rippenverstärkte Bauteil, das bevorzugt durch ein Strangpressteil gebildet wird, kann dabei eine weitgehend quaderförmige Grundform haben, da die vorgesehenen Verstärkungsrippen der Quertraverse eine hohe Druckfestigkeit verleihen. Derartige rippenverstärkte Bauteile können als Strangpressteile in größeren Längen hergestellt werden und lassen sich sehr einfach in Teilabschnitte, die hier jeweils eine Quertraverse bilden, absägen oder in anderer Weise ablängen.

Das verwendete rippenverstärkte Bauteil bzw. Strangpressteil besitzt vorzugsweise eine oder mehrere innere Zwischenböden, die sich zwischen gegenüberliegenden Außenwänden des Bau- bzw. Strangpressteils erstrecken und die somit den Hohlraum der Quertraverse in mehrere Zwischenräume unterteilen. Die Zwischenböden bilden somit eine Rippenverstärkung des Bau- bzw. Strangpressteils, damit dieses auch hohen Drücken standhält. Damit kann ein Druckspeicher im Hilfsrahmen realisiert werden, der problemlos Betriebsdrücken von zum Beispiel 18 bar sowie einem Berstdruck von zum Beispiel 50 bar standhalten kann. Durch die Verwendung der inneren Zwischenböden ist es möglich, die Wandstärke der Außenwände zu reduzieren, wobei die Zwischenböden nochmals eine deutlich geringere Wandstärke aufweisen können als die Außenwände. Die Dicke der Zwischenböden ist vorzugsweise maximal halb so groß, wie die Dicke der Außenwände des rippenverstärkten Bau- bzw. Strangpressteils.

Eine bevorzugte Weiterbildung der Erfindung sieht vor, dass die bevorzugt durch Gussknoten gebildeten Knotenelemente jeweils einen Verbindungshohlraum aufweisen, der die jeweils zugehörige offene Stirnseite des rippenverstärkten Bau- bzw. Strangpressteils übergreift. Dieser Verbindungshohlraum bildet einen Überströmkanal oder Überströmspalt zwischen den einzelnen, durch die Zwischenböden gebildeten Zwischenräume. Würde kein derartiger Verbindungshohlraum an wenigstens einer der beiden Stirnseiten des Bau- bzw. Strangpressteils vorgesehen werden, könnten auch Überströmkanäle in Form von Bohrungen, Schlitzen oder anderen Durchbrechungen in den Zwischenböden vorgesehen werden.

Der Verbindungshohlraum kann als eine oder mehrere Nuten ausgebildet sein, die Überströmkanäle zwischen den Zwischenräumen des Bau- bzw. Strangpressteils bilden. Diese Nuten können sich in den Knotenelementen beispielsweise quer zu den Zwischenböden erstrecken.

Werden dagegen in den Zwischenböden Schlitze, Bohrungen oder andere Durchbrechungen nachträglich angebracht, können die Knotenelemente des rippenverstärkten Bauteils an beiden Stirnseiten bündig abschließen, ohne dass die Knotenelemente einen Verbindungshohlraum zwischen den Zwischenräumen bilden müssen.

Die Quertraverse lässt sich besonders einfach als ein Bauteil, insbesondere als Strangpressteil mit annähernd rechteckigem Querschnitt und mit mehreren Zwischenböden bzw. Trennwänden herstellen und wird entlang der Außenwand an den Stirnseiten mit dem jeweils zugehörigen Knotenelementen bzw. Gussknoten verschweißt. Bei der bevorzugten Ausführungsform bildet das jeweilige Knotenelement eine haubenförmige Abdeckung an der jeweiligen Stirnseite der Quertraverse, wobei die haubenförmige Abdeckung den bereits genannten Verbindungshohlraum zwischen den Zwischenräumen der Quertraverse bzw. des rippenverstärkten Bau- bzw. Strangpressteils bildet. Somit ergibt sich durch das Vorhandensein des Druckspeichers kein höherer Fertigungsaufwand beim Zusammenbau des Hilfsrahmens.

Bevorzugt ist weiterhin vorgesehen, dass die pneumatischen und/oder hydraulischen Anschlüsse des im Hilfsrahmen befindlichen Druckspeichers an einem oder beiden stirnseitigen Knotenelementen angeordnet sind. Die Knotenelemente sind ohnehin ein technisch aufwändigeres Bauteil, weshalb das zusätzliche Vorsehen von Anschlüssen an den Knotenelementen nur eine geringe Änderung an der zum Beispiel Gussform erfordert.

Der erfindungsgemäße Hilfsrahmen ist als Hinterachs-Hilfsrahmen mit einer vorderen und einer hinteren Quertraverse einsetzbar, wobei die hintere Quertraverse den druckfesten Hohlraum für den Druckspeicher enthält. Der Hinterachs-Hilfsrahmen besitzt erfindungsgemäß weiterhin Lagerelemente für ein Getriebe und Befestigungsaugen für Fahrwerkslenker besitzen. Der Druckspeicher kann z. B. als Luftspeicher für die Druckluft einer Luftfederung oder aber auch als zum Beispiel Ölspeicher für das Öl eines aktiv verstellbaren Stabilisators oder für die Getriebeschmierung verwendet werden.

Die Erfindung wird nachfolgend anhand eines in der Zeichnung dargestellten Ausführungsbeispiels näher erläutert.

Es zeigen:
- Fig. 1: die Ansicht eines Hilfsrahmens eines Kraftfahrzeugchassis mit einer vorderen und einer hinteren Quertraverse,
- Fig. 2: eine Schnittansicht des Hilfsrahmens von Fig. 1 entlang einem Längsschnitt BB gemäß Fig. 1 im Bereich der hinteren Quertraverse,
- Fig. 3: eine vergrößerte Teilschnittansicht A gemäß Fig. 2,
- Fig. 4: eine Ansicht des an die hintere Quertraverse anschließenden rechten Gussknotens und
- Fig. 5: eine vereinfachte Darstellung der als Strangpressteil ausgebildeten hinteren Quertraverse des Hilfsrahmens von Figur 1 und Figur 2.

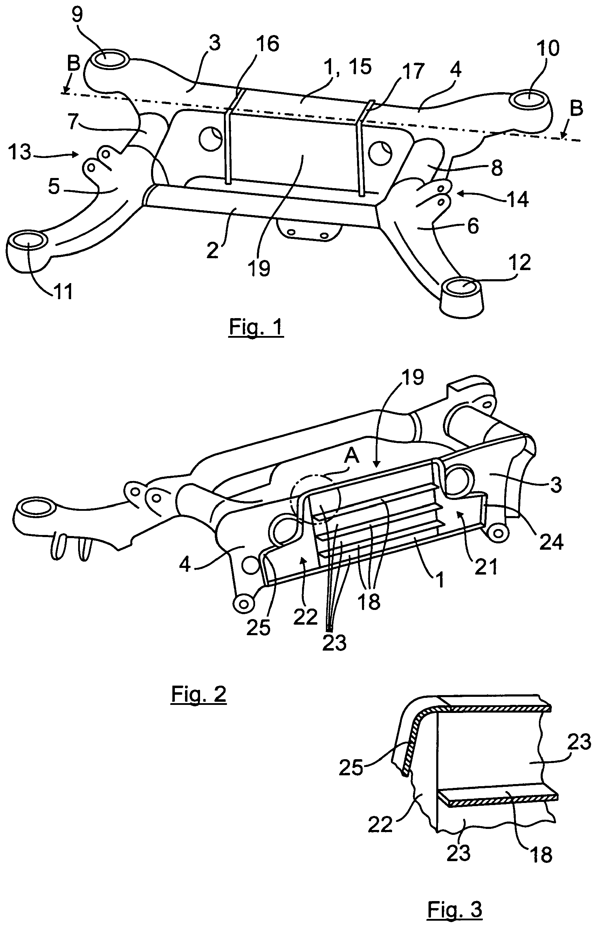

Der in Figur 1 dargestellte Hilfsrahmen dient als Hinterachs-Hilfsrahmen, der eine hintere Quertraverse 1 und eine vordere röhrenförmige Quertraverse 2 hat, die sich jeweils zwischen Gussknoten 3, 4 bzw. 5, 6 erstrecken. Zwischen den hinteren Gussknoten 3, 4 und den vorderen Gussknoten 5, 6 erstrecken sich Rohrabschnitte 7, 8. An den Gussknoten sind Lagerelemente 9 bis 12 ausgebildet, die als Hilfsrahmenlager dienen. An den vorderen Gussknoten 5, 6 sind Befestigungsaugen 13, 14 angebracht, die zum Beispiel Befestigungspunkte für Fahrwerkslenker bilden.

Die sich zwischen den Gussknoten 3, 4 erstreckende Quertraverse 1 hat im Wesentlichen eine quaderförmige Grundform und ist als Strangpressteil 15 hergestellt. Die offenen Stirnseiten des Strangpressteils 15 sind mit den jeweils angrenzenden Rändern 16, 17 der Gussknoten 3, 4 verschweißt. Die Gussknoten 3, 4 schließen somit beide Stirnseiten des Strangpressteils 15 ab, so dass der Innenraum der Quertraverse 1 zusammen mit der Abdeckung durch die Gussknoten 3, 4 einen geschlossenen druckfesten Hohlraum ergibt, der als Druckspeicher dient.

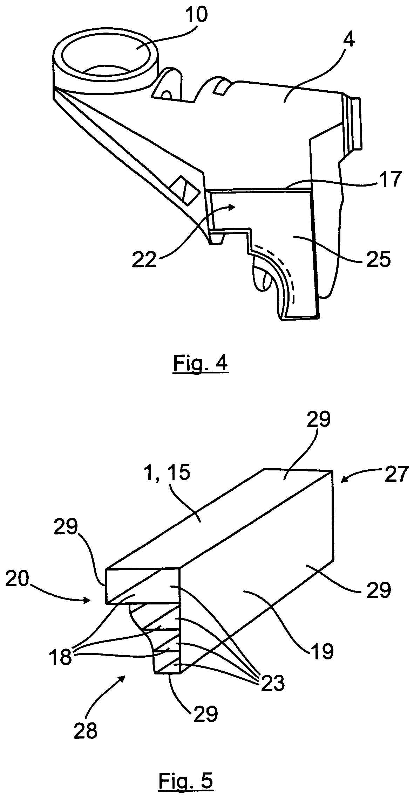

Um eine hohe Druckfestigkeit für die Quertraverse 1 zu erhalten, ist diese als rippenverstärktes Strangpressteil 15 ausgebildet. Die Schnittansicht entlang der Schnittebene BB, die in Fig. 2 dargestellt ist, zeigt, dass das Strangpressteil 15 Zwischenböden 18 aufweist, die sich von der Vorderseite 19 (Fig. 1) bis zur hier nicht sichtbaren Rückseite der Quertraverse 1 erstrecken. In Fig. 5 sind die Zwischenböden 18 an der offenen Stirnseite deutlicher ersichtlich und es ist dort auch die Profilierung der Rückseite 20 der Quertraverse 1 erkennbar.

Figur 3 zeigt einen vergrößerten Ausschnitt A gemäß Fig. 2. Figur 2 und Figur 3 zeigen, dass die beiden Gussknoten 3, 4 jeweils einen Verbindungshohlraum 21, 22 bilden, der die jeweils zugeordnete Stirnseite der Quertraverse 1 übergreift. Die Verbindungshohlräume 21, 22 bilden somit Überströmräume bzgl. der durch die Zwischenböden 18 gebildeten Zwischenräume 23. Die im Innern der Gussknoten 3, 4 jeweils verlaufende Wand 24, 25 bildet somit einen haubenförmigen Abschluss an den Stirnseiten der Quertraverse 1 (siehe auch Fig. 4).

Figur 4 zeigt den Gussknoten 4 gemäß Fig. 1 bzw. Fig. 2. Insbesondere ist hier der zur Quertraverse weisende Randbereich bzw. Rand 17 ersichtlich, der mit der Quertraverse 1 dicht verschweißt wird. Der Rand 17 steht gegenüber der nach innen in den Gussknoten 4 zurückgesetzten Wand 25 stegartig ab, so dass die Wand 25 in Verbindung mit dem Rand 17 den Verbindungshohlraum 22 für die Zwischenräume 23 der Quertraverse 1 bildet.

Der Rand 17 wird mit der in Fig. 5 nicht sichtbaren Stirnseite 27 der Quertraverse 1 verschweißt. An die sichtbare Stirnseite 28 schließt sich der Gussknoten 3 in entsprechender Weise an.

Das hier beispielsweise dargestellte Profil der Quertraverse 1 bzw. des Strangpressteils 15 stellt nur eine von vielen Möglichkeiten dar. Je nach äußerem Profil der Quertraverse 1 kann eine andere innere Rippenverstärkung zwischen den Außenwänden 29 der Quertraverse 1 vorgesehen werden. Eine erfindungsgemäß profilierte Quertraverse 1 ist in Verbindung mit den an beiden Stirnseiten 27, 28 vorgesehenen Gussknoten 3, 4 als Druckspeicher verwendbar, der hohen Druckbelastungen standhält. Somit kann ein derart ausgestalteter Hilfsrahmen für unterschiedliche pneumatische oder hydraulische Speicherfunktionen zusätzlich verwendet werden.

## Patentansprüche

1. Kraftfahrzeugchassis mit einem Hilfsrahmen, der wenigstens einen als Druckspeicher ausgebildeten Hohlraum hat und eine Quertraverse (1) besitzt, die an ihren beiden Stirnseiten (27, 28) mit jeweils einem Knotenelement (3, 4) als Anschlusselement verbunden ist, insbesondere mit einem Gussknoten verschweißt ist, wobei an den Knotenelementen (3, 4) Lagerelemente (10 bis 12) und/oder weitere Rahmenelemente angebracht sind, wobei die Quertraverse (1) als durchgängiges rippenverstärktes Bauteil (15) ausgebildet ist und einen druckfesten Hohlraum für den Druckspeicher bildet, der von den Knotenelementen (3, 4) stirnseitig abgeschlossen ist, und dass der Hilfsrahmen ein Hinterachs-Hilfsrahmen mit einer hinteren und einer vorderen Quertraverse (1, 2) ist, dessen hintere Quertraverse (1) den druckfesten Hohlraum für den Druckspeicher enthält und an dem Lagerelemente (9 bis 12) für eine Hilfsrahmenlagerung und Befestigungsaugen (13, 14) für Fahrwerkslenker angeordnet sind.

2. Kraftfahrzeugchassis nach Anspruch 1, **dadurch gekennzeichnet, dass** das rippenverstärkte Bauteil (15) eine oder mehrere innere sich zwischen gegenüberliegenden Außenwänden (28) erstreckende Zwischenböden (18) und/oder Trennwände hat, die den Hohlraum der Quertraverse (1) in mehrere Zwischenräume (23) unterteilen.

3. Kraftfahrzeugchassis nach einem der Ansprüche 1 oder 2, **dadurch gekennzeichnet, dass** die Knotenelemente (3, 4) jeweils einen Verbindungshohlraum (21, 22) aufweisen, der die jeweils zugehörige offene Stirnseite (27, 28) des rippenverstärkten Bauteils (15) übergreift.

4. Kraftfahrzeugchassis nach Anspruch 3, **dadurch gekennzeichnet, dass** eine oder mehrere Nuten oder andere Überströmkanäle den Verbindungsholraum bilden, die sich zwischen durch Trennwände oder Zwischenböden (18) ausgebildeten Zwischenräumen (23) des rippenverstärkten Bauteils (15) erstrecken.

5. Kraftfahrzeugchassis nach einem der Ansprüche 2 bis 4, **dadurch gekennzeichnet, dass** die Zwischenböden (18) oder Trennwände Schlitze, Bohrungen oder andere Durchbrechungen aufweisen, und dass die Knotenelemente (3, 4) das rippenverstärkte Bauteil (15) an beiden Stirnseiten (27, 28) bündig abschließen.

6. Kraftfahrzeugchassis nach einem der vorhergehenden Ansprüche, **dadurch gekennzeichnet, dass** die Dicke der Zwischenböden (18) oder anderer Verstärkungsteile bildenden Rippen oder Trennwände des rippenverstärkten Bauteils (15) maximal die Hälfte der Dicke der Außenwände (29) des rippenverstärkten Bauteils (15) beträgt.

7. Kraftfahrzeugchassis nach einem der vorhergehenden Ansprüche, **dadurch gekennzeichnet, dass** die Quertraverse (1) eine in etwa quaderförmige Grundform hat.

8. Kraftfahrzeugchassis nach einem der vorhergehenden Ansprüche, **dadurch gekennzeichnet, dass** die pneumatischen und/oder hydraulischen Anschlüsse des Druckspeichers an einem oder beiden Knotenelemente (3, 4) angeordnet sind.

9. Kraftfahrzeugchassis nach einem der vorhergehenden Ansprüche, **dadurch gekennzeichnet, dass** der Druckspeicher einen Luftspeicher für die Druckluft einer Luftfederung bildet.

10. Kraftfahrzeugchassis nach einem der Ansprüche 1 bis 8, **dadurch gekennzeichnet, dass** der Druckspeicher ein Ölspeicher für das Öl eines aktiv verstellbaren Stabilisators oder für die Getriebeschmierung ist.

11. Kraftfahrzeugchassis nach einem der vorhergehenden Ansprüche, **dadurch gekennzeichnet, dass** das rippenverstärkte Bauteil (15) ein Strangpressteil ist.

## Claims

1. Motor vehicle chassis with a subframe, which has at least one cavity formed as a pressure accumulator and has a crossmember (1) which at its two front sides (27, 28) is connected respectively with one nodal element (3, 4) as connecting element, is in particular welded with a casting joint, wherein at the nodal elements (3, 4), mounting elements (10 to 12) and/or further frame elements are mounted, wherein the crossmember (1) is formed as a continuous rib-reinforced component (15) and forms a pressure resistant cavity for the pressure accumulator, which is sealed on the front side by the nodal elements (3, 4), and that the subframe is a rear axle subframe with one rear and one front crossmember (1, 2) the rear crossmember (1) of which contains the pressure resistant cavity for the pressure accumulator and at which are disposed mounting elements (9 to 12) for a subframe mounting and fastening eyes (13, 14) for chassis links.

2. Motor vehicle chassis according to claim 1, **characterised in that** the rib-reinforced component (15) has one or a plurality of internal intermediate floors (18) and/or dividing walls extending between opposing outer walls (28), which divide the cavity of the crossmember (1) into a plurality of interspaces (23).

3. Motor vehicle chassis according to one of claims 1 or 2, **characterised in that** the nodal elements (3, 4) each have a connection cavity (21, 22), which engages over the respective corresponding open front side (27, 28) of the rib-reinforced component (15).

4. Motor vehicle chassis according to claim 3, **characterised in that** one or more grooves or other transfer ducts form the connection cavity, which extend between interspaces (23) of the rib-reinforced component (15), said interspaces formed by dividing walls or intermediate floors (18).

5. Motor vehicle according to one of claims 2 to 4, **characterised in that** the intermediate floors (18) or dividing walls have slits, holes or other apertures, and that the nodal elements (3, 4) are flush with the rib-reinforced component (15) at both front sides (27, 28).

6. Motor vehicle chassis according to one of the preceding claims, **characterised in that** the thickness of the intermediate floors (18) or of other ribs or dividing walls forming reinforcing parts of the rib-reinforced component (15) is maximum half of the thickness of the outer walls (29) of the rib-reinforced component (15).

7. Motor vehicle chassis according to one of the preceding claims, **characterised in that** the crossmember (1) has an approximately cuboidal basic shape.

8. Motor vehicle chassis according to one of the preceding claims, **characterised in that** the pneumatic and/or hydraulic connections of the pressure accumulator are disposed at one or both nodal elements (3, 4).

9. Motor vehicle chassis according to one of the preceding claims, **characterised in that** the pressure accumulator forms an air reservoir for the pressurised air of a pneumatic suspension.

10. Motor vehicle chassis according to one of claims 1 to 8, **characterised in that** the pressure accumulator is an oil reservoir for the oil of an actively adjustable stabiliser or for gear lubrication.

11. Motor vehicle chassis according to one of the preceding claims, **characterised in that** the rib-reinforced component (15) is an extruded part.

## Revendications

1. Châssis de véhicule automobile avec un faux-châssis, qui a au moins un espace creux réalisé comme accumulateur de pression et une traverse transversale (1), qui est assemblée par ses deux extrémités frontales (27, 28) à chaque fois avec un élément de noeud (3, 4) comme élément de raccord, en particulier est soudée avec un noeud de fonte, dans lequel des éléments de support (10 à 12) et/ou d'autres éléments de châssis sont placés au niveau des éléments de noeud (3, 4), dans lequel la traverse transversale (1) est réalisée comme une pièce (15) d'un seul tenant et renforcée par des nervures et forme un espace creux résistant à la pression pour l'accumulateur de pression qui est fermé frontalement par les éléments de noeud (3, 4) et que le faux-châssis est un faux-châssis d'essieu arrière avec une traverse transversale arrière et une avant (1, 2), dont la traverse transversale arrière (1) contient l'espace creux résistant à la pression pour l'accumulateur de pression et au niveau duquel sont agencés des éléments de support (9 à 12) pour un support de faux-châssis et des oeillets de fixation (13, 14) pour des bras de suspension.

2. Châssis de véhicule automobile selon la revendication 1, **caractérisé en ce que** la pièce (15) renforcée par des nervures a un ou plusieurs fonds intermédiaires (18) et/ou parois séparatrices, intérieurs, qui s'étendent entre des parois extérieures (28) opposées et qui divisent l'espace creux de la traverse transversale (1) en plusieurs espaces intermédiaires (23).

3. Châssis de véhicule automobile selon l'une quelconque des revendications 1 ou 2, **caractérisé en ce que** les éléments de noeud (3, 4) présentent à chaque fois un espace creux de liaison (21, 22) qui passe par-dessus le côté frontal (27, 28) ouvert, respectivement associé, de la pièce (15) renforcée par des nervures.

4. Châssis de véhicule automobile selon la revendication 3, **caractérisé en ce qu'**une ou plusieurs rainures ou autres canaux de débordement forment l'espace creux de liaison et s'étendent entre des espaces intermédiaires (23), réalisés par des parois séparatrices ou des fonds intermédiaires (18), de la pièce (15) renforcée par des nervures.

5. Châssis de véhicule automobile selon l'une quelconque des revendications 2 à 4, **caractérisé en ce que** les fonds intermédiaires (18) ou parois séparatrices présentent des fentes, trous ou autres découpes et **en ce que** les éléments de noeud (3, 4) ferment à fleur la pièce (15) renforcée par des nervures au niveau des deux côtés frontaux (27, 28).

6. Châssis de véhicule automobile selon l'une quelconque des revendications précédentes, **caractérisé en ce que** l'épaisseur des fonds intermédiaires (18) ou d'autres nervures ou parois séparatrices, formant des parties de renfort, de la pièce (15) renforcée par des nervures est égale au maximum à la moitié de l'épaisseur des parois extérieures (29) de la pièce (15) renforcée par des nervures.

7. Châssis de véhicule automobile selon l'une quelconque des revendications précédentes, **caractérisé en ce que** la traverse transversale (1) a une forme de base sensiblement parallélépipédique.

8. Châssis de véhicule automobile selon l'une quelconque des revendications précédentes, **caractérisé en ce que** les raccords pneumatiques et/ou hydrauliques de l'accumulateur de pression sont agencés au niveau d'un élément de noeud ou des deux éléments de noeuds (3, 4).

9. Châssis de véhicule automobile selon l'une quelconque des revendications précédentes, **caractérisé en ce que** l'accumulateur de pression forme un accumulateur d'air pour l'air comprimé d'une suspension pneumatique.

10. Châssis de véhicule automobile selon l'une quelconque des revendications 1 à 8, **caractérisé en ce que** l'accumulateur de pression est un accumulateur d'huile pour l'huile d'un stabilisateur à réglage actif ou pour le graissage de transmission.

11. Châssis de véhicule automobile selon l'une quelconque des revendications précédentes, **caractérisé en ce que** la pièce (15) renforcée par des nervures est une pièce extrudée.
